# FASCICULE DE BREVET EUROPEEN

(11) **EP 2 278 205 B1**
(45) Date de publication et mention de la délivrance du brevet: **08.02.2012**
(21) Numéro de dépôt: 10169946.0
(22) Date de dépôt: 19.07.2010
(51) Int. Cl.: F16L 37/084, F16L 37/40

(54) **Elément femelle de raccord et raccord rapide incorporant un tel élément**
Kupplungsaufnahme und diese beinhaltende Schnellkupplung
Female coupling element and quick acting coupling incorporating such an element

(30) Priorité: 23.07.2009 FR 0955159
(43) Date de publication de la demande: 26.01.2011
(73) Titulaire: STAUBLI FAVERGES, 74210 FAVERGES (FR)
(72) Inventeur: Tiberghien, Alain-Christophe, 74320 Sevrier (FR); Pastore, Olivier, 73400 Ugine (FR)
(74) Mandataire: Myon, Gérard Jean-Pierre

(56) Documents cités:
- EP-A1- 1 531 297
- EP-A1- 1 561 991
- FR-A1- 2 622 671
- US-A- 1 360 588

## Description

L'invention a trait à un élément femelle de raccord rapide ainsi qu'à un raccord rapide qui peut être utilisé pour la jonction amovible de deux canalisations de fluide sous pression et qui comprend, entre autres, un tel élément femelle.

Dans le domaine de la jonction amovible de canalisations parcourues par un fluide sous pression, il est connu d'utiliser un élément femelle de raccord qui comprend des moyens commandés de verrouillage d'un embout mâle en configuration emmanchée dans l'élément femelle, c'est-à-dire dans une configuration raccordée des canalisations dont les éléments mâle et femelle constituent les extrémités respectives.

Il est connu de EP-A-1 561 991 d'utiliser des billes de verrouillage montées dans un élément femelle de raccord et prévues pour être sélectivement engagées dans une gorge périphérique externe d'un embout mâle. Ces billes peuvent marquer ou mater la surface externe d'un embout mâle introduit dans cet élément femelle.

Il est par ailleurs connu de EP-A-1 531 297 d'utiliser des doigts mobiles en translation, parallèlement à un axe oblique par rapport à l'axe d'emmanchement de l'élément mâle dans l'élément femelle. Ceci diminue les risques de matage entre les doigts de verrouillage et le ou les embouts mâles avec lequel ou lesquels coopère l'élément femelle. Toutefois, compte tenu du caractère incliné de l'axe de déplacement des doigts de verrouillage, un espace de dégagement radial doit être prévu entre une patte de chacun de ces doigts, qui fait saillie radialement par rapport au corps de l'élément femelle, et la surface radiale interne d'une bague de commande. L'encombrement radial du raccord est augmenté par ce jeu radial. Cet encombrement radial dépend par ailleurs de l'étendue du contact entre le doigt de verrouillage et l'embout d'un élément mâle emmanché dans l'élément femelle, selon une direction tangentielle aux doigts de verrouillage.

L'invention propose un nouvel élément femelle de raccord rapide dont l'encombrement radial est limité, voire diminué par rapport à ceux de l'état de la technique, tout en augmentant la robustesse de son ou de ses organes de verrouillage et en diminuant les risques de matage entre les surfaces de contact des éléments mobiles les uns par rapport aux autres.

A cet effet, l'invention concerne un élément femelle de raccord rapide destiné à la jonction amovible de canalisations de fluide sous pression, cet élément femelle étant apte à recevoir en emmanchement, selon un axe longitudinal de l'élément femelle, un embout d'un élément mâle de raccord, cet élément femelle étant équipé d'au moins un organe de verrouillage coulissant dans un logement ménagé dans un corps de l'élément femelle et mobile, entre une première position, où une portion de l'organe de verrouillage fait saillie hors du logement dans une configuration où elle peut être engagée dans une gorge périphérique d'un embout d'élément mâle emmanché dans l'élément femelle, et une deuxième position, où la portion précitée de l'organe de verrouillage est dégagée par rapport à la gorge d'un embout d'élément mâle emmanché dans l'élément femelle, alors qu'une bague de commande, coulissante par rapport au corps de l'élément femelle parallèlement à un axe longitudinal de l'élément femelle, est apte à déplacer l'organe de verrouillage entre ses première et deuxième positions. Cet élément femelle est caractérisé en ce que l'organe de verrouillage est pourvu d'au moins une surface en tronçon de sphère et en ce que le déplacement de l'organe de verrouillage entre ses première et deuxième positions a lieu par pivotement autour d'un axe fixe par rapport au corps de l'élément femelle, passant par le centre de courbure de la surface en tronçon de sphère de l'organe de verrouillage et perpendiculaire à l'axe longitudinal de cet élément femelle.

Grâce à l'invention, le déplacement de l'organe de verrouillage entre sa première position et sa deuxième position a lieu sur une course courbe qui induit un déplacement radial plus faible que dans le cas d'un doigt de verrouillage se déplaçant en translation selon une direction inclinée. Ceci rend l'élément femelle plus compact, en particulier selon une direction radiale par rapport à son axe central longitudinal le long duquel est effectué l'emmanchement de l'embout mâle.

Selon des aspects avantageux mais non obligatoires de l'invention, un tel élément femelle de raccord peut incorporer une plusieurs des caractéristiques suivantes, prises dans toute combinaison techniquement admissible :
- Le logement est pourvu d'au moins une surface de guidage de l'organe de verrouillage lors de son déplacement entre ses première et deuxième positions, cette surface de guidage étant en tronçon de sphère dont le centre de courbure est confondu avec le centre de courbure de la surface en tronçon de sphère de l'organe de verrouillage en configuration montée de l'organe de verrouillage dans le logement.
- L'organe de verrouillage est pourvu de deux surfaces concentriques en tronçon de sphère définissant respectivement une partie de deux faces de l'organe de verrouillage.
- Il est prévu des moyens d'application, sur la bague de commande, d'un effort de rappel élastique de l'organe de verrouillage vers l'une de ses première et deuxième positions.
- L'élément femelle de raccord est équipé de deux organes de verrouillage mobiles coulissant chacun dans un logement ménagé dans le corps de l'élément femelle, alors que les deux organes de verrouillage, d'une part, et les deux logements, d'autre part, sont disposés de façon symétrique de part et d'autre de l'axe longitudinal de l'élément femelle de raccord.
- L'élément femelle de raccord est équipé d'au moins deux organes de verrouillage, alors que la ou les surfaces en tronçon de sphère de tous les organes de verrouillage ont un centre de courbure commun.
- La portion de l'organe de verrouillage, qui fait saillie hors du logement dans la première position de l'organe de verrouillage, a une surface en section de tronc de cône apte à venir en appui surfacique contre un bord tronconique d'une gorge d'un embout d'élément mâle emmanché dans l'élément femelle. Dans ce cas, une droite passant par le centre géométrique de la surface en tronc de cône et perpendiculaire à cette surface, passe par le centre de courbure de la surface en tronçon de sphère de l'organe de verrouillage.
- La surface en section de tronc de cône s'étend autour de l'axe longitudinal de l'élément femelle sur un secteur angulaire dont l'angle au sommet a une valeur comprise entre 90° et 150°, de préférence de l'ordre de 120°.
- Un plan perpendiculaire à l'axe longitudinal de l'élément femelle et contenant le centre de courbure de la surface en tronçon de sphère d'un organe de verrouillage coupe cet organe de verrouillage dans ses première et deuxième positions.

L'invention concerne également un raccord rapide pour la jonction amovible de canalisations de fluide sous pression, ce raccord comprenant deux éléments, respectivement mâle et femelle aptes à s'emmancher l'un dans l'autre. Ce raccord est caractérisé en ce que l'élément femelle est tel que mentionné ci-dessus.

L'invention sera mieux comprise et d'autres avantages de celle-ci apparaîtront plus clairement à la lumière de la description qui va suivre de cinq modes de réalisation d'un élément femelle de raccord et d'un raccord conformes à son principe, donnée uniquement à titre d'exemple et faite en référence aux dessins annexés dans lesquels :
- la figure 1 est une coupe axiale d'un raccord conforme à l'invention incorporant un élément femelle conforme à l'invention, l'élément mâle étant en cours d'approche, lors de son introduction dans l'élément femelle,
- la figure 2 est une coupe analogue à la figure 1, à plus petite échelle, les éléments mâle et femelle étant en cours d'accouplement,
- la figure 3 est une coupe analogue à la figure 2, les éléments du raccord étant en configuration accouplée,
- la figure 4 est une coupe analogue à la figure 2, lorsque les éléments de raccord sont en cours de désaccouplement,
- la figure 5 est une vue à plus grande échelle du détail V à la figure 3,
- la figure 6 est une vue en perspective à plus grande échelle d'un organe de verrouillage appartenant à l'élément femelle du raccord des figures 1 à 5,
- la figure 7 est une coupe dans le plan VII à la figure 6,
- la figure 8 est une vue en perspective de deux organes de verrouillage et de leur moyens de commande, qui appartiennent à l'élément femelle du raccord des figures 1 à 7, on y a représenté en P₁ le plan de coupe des figures 1 à 5,
- la figure 9 est une représentation schématique de principe d'un raccord conforme à un deuxième mode de réalisation de l'invention dont l'élément femelle fait partie d'un pistolet, ce raccord étant représenté dans une configuration analogue à celle de la figure 3,
- la figure 10 est une représentation en perspective et en coupe partielle d'une partie d'un élément femelle de raccord conforme à un troisième mode de réalisation de l'invention,
- la figure 11 est une représentation en perspective et en coupe partielle d'une partie d'un élément femelle de raccord conforme à un quatrième mode de réalisation de l'invention, et
- la figure 12 est une représentation partielle, en section, d'un élément femelle de raccord conforme à un cinquième mode de réalisation de l'invention et d'un élément mâle du même raccord.

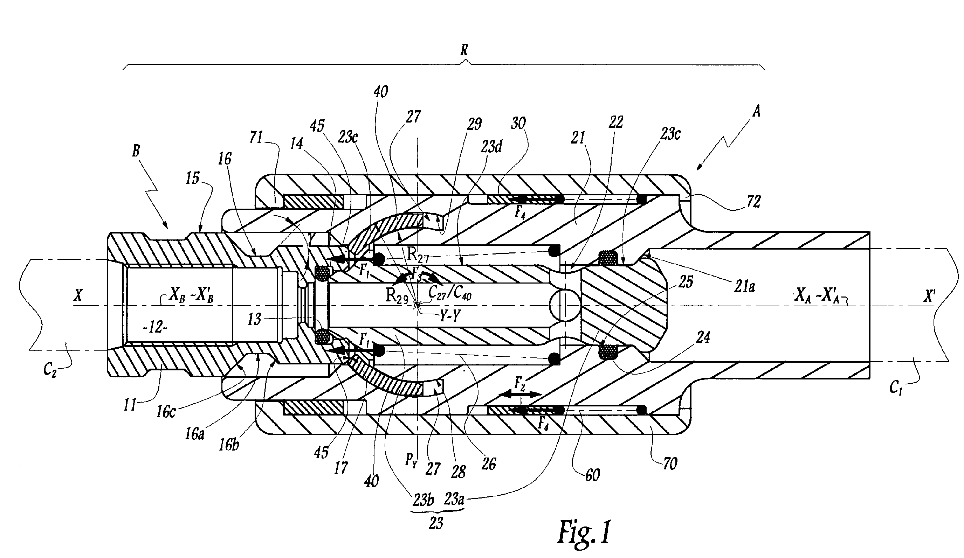

Le raccord rapide R représenté sur les figures 1 à 8 comprend un élément femelle A et un élément ou embout mâle B prévus pour s'emmancher l'un dans l'autre dans la direction d'un axe X-X' qui est, en pratique, un axe longitudinal commun aux éléments A et B.

Par convention, on considère que la partie avant d'un élément A ou B est la partie de cet élément tournée vers l'autre élément lors de leur connexion.

La partie arrière de l'élément femelle A est raccordée fluidiquement à une première canalisation C₁, elle-même raccordée à une source de fluide sous pression non représentée. La partie arrière de l'élément mâle B est raccordée à une deuxième canalisation C₂, elle-même raccordée à un organe d'utilisation ou de stockage du fluide provenant de la source précitée.

L'élément mâle B comprend un corps tubulaire 11 sur lequel est raccordée la canalisation C₂ et qui définit un canal 12 de circulation de fluide sous pression. Ce canal peut constituer un logement pour un clapet anti-retour non représenté. Un joint torique 13 est monté dans une gorge périphérique interne 14 du corps 11.

L'élément B est à symétrie de révolution autour d'un axe X_{B}-X'_{B} qui est confondu avec l'axe X-X' lors de l'emmanchement de cet élément dans l'élément femelle A.

Sur sa surface radiale externe 15, le corps 11 est pourvu d'une gorge périphérique 16 de révolution, dont le profil est défini par un fond 16a qui est plat et deux bords 16b et 16c qui divergent en s'éloignant du fond 16a. Ainsi, le fond 16a est cylindrique à base circulaire, alors que les bords 16b et 16c sont tronconiques.

L'élément femelle A comprend un corps 21 tubulaire et à symétrie de révolution autour d'un axe X_{A}-X'_{A} également confondu avec l'axe X-X' lors de l'emmanchement de l'élément mâle B. La canalisation C₁ est raccordée sur la partie arrière du corps 21. Ce corps définit un canal central 22 dans lequel est disposé un clapet 23 mobile parallèlement à l'axe X_{A}-X'_{A} qui est un axe longitudinal central de l'élément A.

Le clapet 23 comprend d'une partie pleine 23a et d'une partie creuse 23b. La partie 23a a une surface externe 23c cylindrico-conique destinée à venir en appui contre un siège 21 a formé par le corps 21. Un joint torique 24 est installé dans une gorge radiale interne 25 du corps 21 et est destiné à assurer l'étanchéité avec la surface 23c ou avec la surface radiale externe 23d de la partie 23b.

Un ressort 26 exerce sur une collerette 23e du clapet 23 un effort élastique F₁ qui tend à plaquer la surface 23c de la partie 23a contre le siège 21 a, c'est-à-dire à fermer l'élément femelle A.

Une bague de commande 30 est montée autour du corps 21, en étant mobile en translation par rapport à celui-ci et parallèlement à l'axe X_{A}-X'_{A}, comme représenté par la double flèche F₂ à la figure 1. La bague de commande 30 est bloquée en rotation par rapport au corps 21.

La bague de commande 30 commande deux organes de verrouillage ou « doigts » 40 qui sont identiques et reçus dans deux logements 27 ménagés dans le corps 21 et disposés symétriquement, de part et d'autre de l'axe X_{A}-X'_{A}.

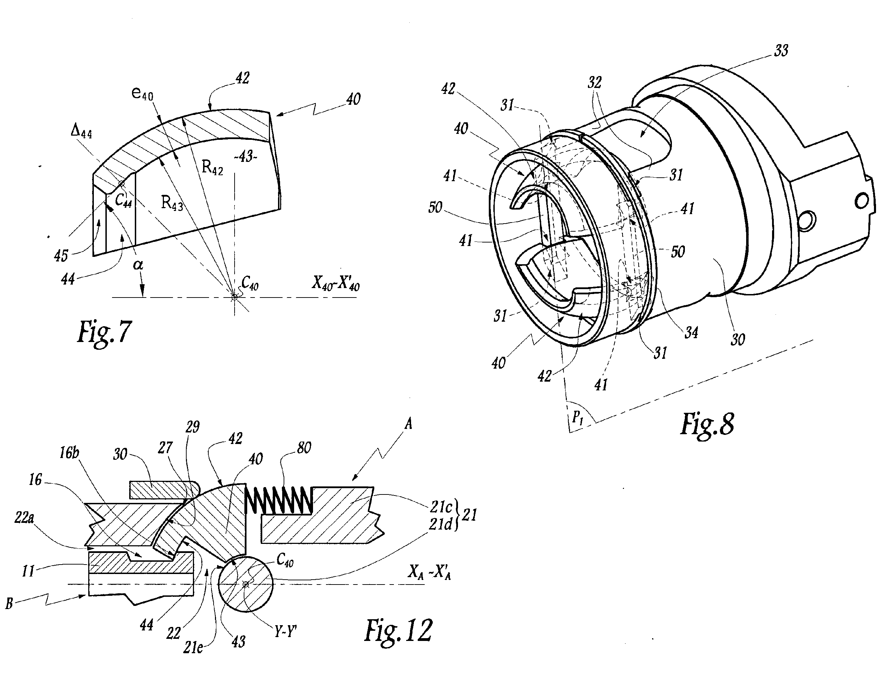

Comme il ressort plus particulièrement de la figure 8, la bague de commande 30 est pourvue de quatre encoches 31 dans lesquelles sont engagées deux barrettes 50. Les barrettes 50 sont solidaires, en rotation et en translation par rapport à l'axe X_{A}-X'_{A}, avec la bague de commande 30. Ces barrettes sont elles-mêmes engagées dans des encoches 41 ménagées sur la surface externe 42 de chaque doigt 40. Plus précisément, chaque barrette 50 est engagée dans deux encoches 31 de la bague de commande 30 et dans une encoche 41 de chacun des deux doigts 40.

Les encoches 31 sont formées dans deux ailes 32 de la bague de commande 30 qui sont séparées par deux ouvertures 33 permettant le passage de deux saillies 21 b monoblocs avec le corps 21. Ainsi, la bague de commande 30 est solidaire en rotation avec le corps 21. Un circlip 34 est disposé autour des ailes 32, axialement au niveau des encoches 31 et maintient les barrettes 50 dans les encoches 31. Pour la clarté du dessin, le circlip 34 est représenté uniquement à la figure 8.

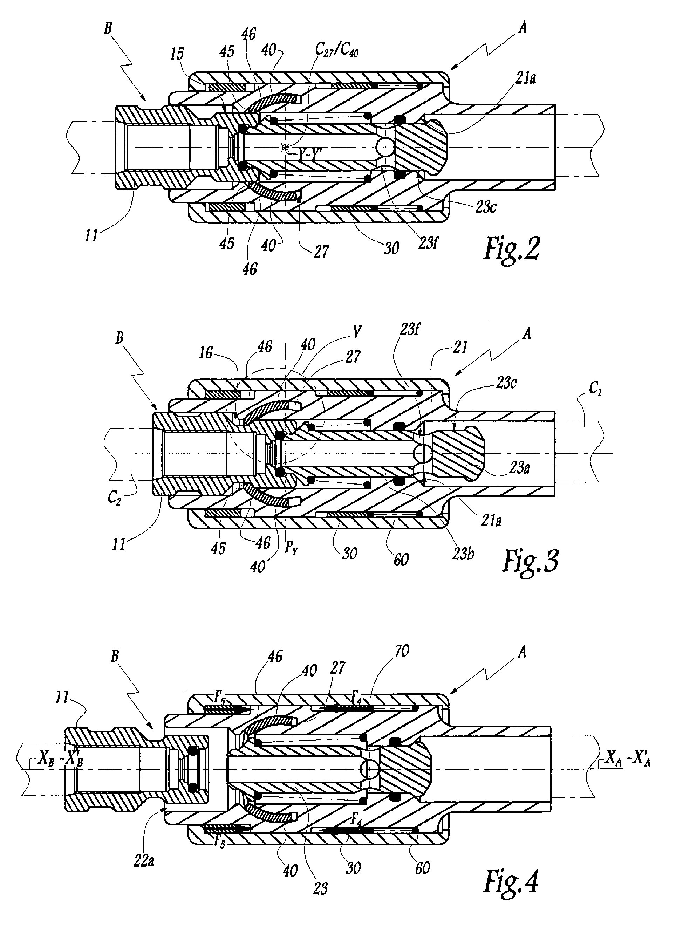

Chaque organe de verrouillage 40 a une surface 43 en tronçon de sphère dont on note C₄₀ le centre de courbure. La surface 43 est une surface interne de l'organe 40 dans la mesure où elle est orientée vers le centre de courbure C₄₀. Cette surface interne 43 se prolonge, du côté de l'embouchure 22a du canal 22 par laquelle est introduit l'élément mâle B, par une surface 44 en secteur de tronc de cône convergeante en s'éloignant de la surface interne 43. On note α le demi-angle au sommet de la surface 44 par rapport à un axe X₄₀-X'₄₀ qui est un axe de symétrie des surfaces enveloppes des surfaces 42, 43 et 44 et qui contient le point C₄₀. L'axe X₄₀-X'₄₀ est confondu avec l'axe X_{A}-X'_{A} dans la configuration de la figure 3. La valeur de l'angle α est comprise entre 30° et 60°, par exemple égale à 45°. Elle est choisie en fonction de la géométrie de l'embout mâle B.

On note 45 le bord avant d'un organe de verrouillage 40 qui jouxte sa surface 44. On note 46 la portion d'un organe de verrouillage qui est délimitée par la surface 44, sur son côté interne, c'est-à-dire du côté du centre de courbure C₄₀.

On note β l'angle au sommet du secteur angulaire sur lequel la surface 44 s'étend autour de l'axe X_{A}-X'_{A}. La valeur de l'angle β est comprise entre 90° et 150°, de préférence de 120°.

La surface externe 42 de l'organe de verrouillage 40 est également en tronçon de sphère centrée sur le point ou centre de courbure C₄₀. Cette surface est externe dans la mesure où elle est orientée à l'opposé du centre de courbure C₄₀. On note respectivement R₄₂ et R₄₃ les rayons des surfaces 42 et 43. La différence entre ces rayons correspond à l'épaisseur radiale e₄₀ de l'organe de verrouillage 40 entre les surfaces 42 et 43 qui définissent les faces externe et interne de chaque organe de verrouillage.

La surface 43 d'un organe de verrouillage 40 est concave et sa surface 42 est convexe, alors que son centre de courbure C₄₀ est situé hors de l'organe 40, dans la concavité de la surface 43.

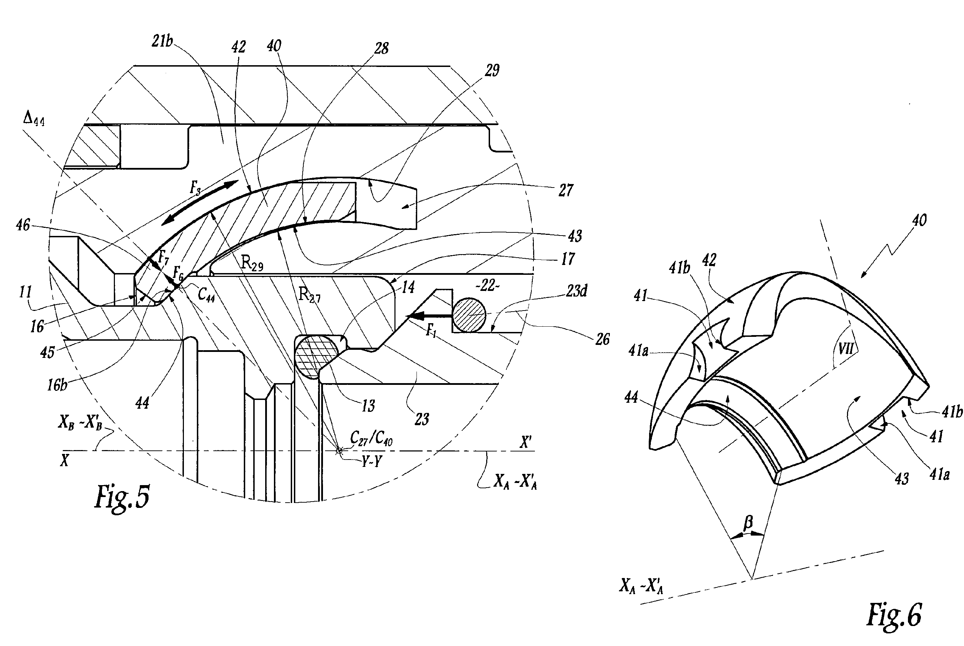

La liaison cinématique entre la bague de commande 30 et les deux organes de verrouillage 40, qui est obtenue grâce aux barrettes 50, est telle qu'un mouvement de translation axiale de la bague de commande 30 parallèlement à l'axe X_{A}-X'_{A} induit un mouvement correspondant des organes de verrouillage 40 dans les logements 27, les encoches 41 des organes de verrouillage 40 pouvant coulisser le long des barrettes 50 du fait de leur géométrie avec bords arrondis 41 a et 41 b visibles à la figure 6.

Chaque logement 27 est défini entre une surface interne convexe 28 et une surface externe concave 29.

La surface 28 est en tronçon de sphère et l'on note C₂₇ son centre de courbure. En configuration installée des organes de verrouillage 40 dans les logements 27, les centres de courbure d'un logement 27 et d'un organe de verrouillage reçu dans ce logement C₂₇ et C₄₀ sont confondus et fixes par rapport au corps 21. On note R₂₇ le rayon de la surface interne 28, ce rayon ayant une valeur égale, à 0,1 mm près, ou légèrement inférieure à celle du rayon R₄₃.

Par ailleurs, la surface 29 de chaque logement 27 est également centrée sur le point ou centre de courbure C₂₇, tout en étant en tronçon de sphère et son rayon R₂₉ a une valeur égale, à 0,1 mm près, ou légèrement supérieure à celle du rayon R₄₃.

La surface 28 est interne en ce sens qu'elle définit le logement 27 du côté du centre de courbure C₂₇, alors que la surface externe 29 est externe en ce sens qu'elle définit ce logement à l'opposé de ce centre.

Ainsi, chaque organe de verrouillage 40 peut être introduit dans un logement 27 et guidé par la coopération des surfaces 43 et 28, sur le côté interne de cet organe de verrouillage dirigé vers le centre de courbure C₄₀, et par la coopération des surfaces 42 et 29 sur le côté externe de l'organe de verrouillage 40, c'est-à-dire son côté orienté à l'opposé du centre de courbure C₄₀.

Les centres de courbure C₄₀ des deux organes de verrouillage 40 sont confondus, de même que les centres de courbure C₂₇ des deux logements 27. Ces centres de courbure C₂₇/C₄₀ sont disposés sur l'axe X_{A}-X'_{A}, avec une position fixe le long de cet axe.

En configuration montée d'un organe de verrouillage 40 dans le logement 27 correspondant, les centres de courbure C₂₇ et C₄₀ sont disposés, le long de l'axe X_{A}-X'_{A}, à l'opposé de l'embouchure 22a du canal 22 par rapport au bord 45. En d'autres termes, les centres de courbure C₂₇ et C₄₀ sont disposés vers l'arrière de l'élément femelle A par rapport à la surface 44 d'un organe de verrouillage 40.

Selon une variante non représentée de l'invention, les organes de verrouillage 40 peuvent être pourvus d'une surface en tronçon de sphère sur un seul de leur côtés, interne ou externe, la géométrie du logement 27 étant alors adaptée.

On note Δ₄₄ une droite passant par le centre géométrique C₄₄ de la surface 44 et perpendiculaire à cette surface en ce point. En configuration montée d'un organe de verrouillage 40 dans son logement 27, la droite Δ₄₄ coupe l'axe X_{A}-X'_{A} au point C₄₀. En d'autres termes, la droite Δ₄₄ associée à un organe de verrouillage 40 passe par le centre de courbure C₄₀ associé à cet organe de verrouillage et l'intersection de la droite Δ₄₄ avec l'axe X_{A}-X'_{A} est confondue avec le centre de courbure de la surface interne 43.

En configuration montée des organes de verrouillage 40 dans les logements 27, ces organes de verrouillage ont leur surface 42 respective centrée sur le point C₄₀ qui correspond au point sur lequel est dirigée la résultante des efforts de verrouillage exercées par chaque organe de verrouillage 40 sur le bord tronconique 16b de la gorge 16 de l'élément mâle B. Compte tenu de la géométrie en tronçon de sphère des surfaces 42, 43, 28 et 29, le déplacement des organes de verrouillage 40 à l'intérieur des logements 27 a lieu par un mouvement de pivotement, dans le sens de la flèche courbe F₃ aux figures 1 et 5, autour d'un axe Y-Y' fixe par rapport au corps 21, perpendiculaire à l'axe X_{A}-X'_{A} et passant par le point C₄₀. Dans l'exemple représenté, l'axe Y-Y' est perpendiculaire au plan des figures 1 à 5 car son orientation est imposée par la coopération des barrettes 50 avec la bague 30 qui est clavetée autour du corps 21. L'axe Y-Y' est perpendiculaire à un plan contenant l'axe X_{A}-X'_{A} et les centres géométriques C₄₄ des surfaces 44 des deux organes 40. L'axe Y-Y' est perpendiculaire au plus grand axe des barrettes 50. Cet axe est fixe par rapport au corps 21, car il passe par le point C₄₀ qui est fixé par rapport à ce corps et car l'orientation des barrettes autour de l'axe X_{A}-X'_{A} est fixe.

Ce mouvement de pivotement F₃ induit que le déplacement des organes de verrouillage 40, selon une direction radiale par rapport à l'axe X-X' dans le plan de la figure 1, a une amplitude moins importante que dans le cas où des organes de verrouillage se déplacent en translation. Ceci permet donc de limiter l'encombrement radial de l'élément femelle A et, par voie de conséquence, du raccord R.

La bague de commande 30 est soumise à l'action d'un ressort 60 qui exerce sur cette bague un effort élastique F₄ tendant à déplacer cette bague vers l'embouchure 22a du canal 22, c'est-à-dire déplacer les organes de verrouillage 40 vers une configuration où leur portion 46 fait saillie en direction de l'axe X-X' hors des logements 27. Par défaut, les organes de verrouillage 40 sont donc repoussés, par le ressort 60 à travers la bague 30, dans une position dans laquelle leur portion 46 dépasse des logements 27, comme représenté à la figure 3, de telle sorte qu'elle peut être engagée dans la gorge 16 d'un élément mâle B, lorsqu'un tel élément est emmanché dans l'élément femelle A.

Une bague d'actionnement 70 est montée autour du corps 21 et de la bague de commande 30 et permet de déplacer cette bague de commande en direction de l'arrière du corps 21, à l'encontre de l'effort F₄, en exerçant sur la bague de commande 30 un effort F₅ qui fait reculer la bague de commande 30.

Le déplacement de la bague de commande 30 et des organes de verrouillage 40 sous l'action de l'effort F₄ exercé par le ressort 60 est limité par le fait que la bague de commande 30 est en appui contre une collerette' radiale interne 71 de la bague d'actionnement 70, laquelle vient en butée, par une collerette radiale interne 72, contre le corps 21. Ceci permet de maîtriser la position des organes de verrouillage 40 en l'absence d'élément mâle et évite qu'ils ne soient chassés des logements 27, sous l'action du ressort 60, au point de gêner l'accouplement des éléments A et B.

Le fonctionnement est le suivant : Lorsque l'élément mâle B est approché à l'intérieur de l'élément femelle A, le bord avant 17 du corps 11 vient au contact des bords 45 des organes de verrouillage 40, ce qui est représenté à la figure 1. Si l'on poursuit l'emmanchement en poussant l'élément B vers l'arrière du corps 21, le corps 11 repousse les organes de verrouillage 40 dans les logements 27, comme représenté à la figure 2. Les bords 45 des organes de verrouillage 40 glissent alors sur la surface radiale externe 15 du corps 11, alors que les portions 46 des organes de verrouillage 40 sont repoussées vers l'intérieur des logements 27.

Le déplacement des organes de verrouillage 40 entre la configuration de la figure 1 et celle de la figure 2 a lieu par pivotement autour de l'axe Y-Y' qui passe par les points C₂₇ et C₄₀ confondus. Ce pivotement, dans le sens « d'ouverture » ou de « recul » des organes de verrouillage 40, est guidé par la coopération des surfaces 43 et 28. Il est également guidé par la coopération des surfaces 42 et 29. Ce mouvement des organes de verrouillage 40 à l'intérieur du corps 21 a également pour effet de faire reculer la bague de commande 30 à l'encontre de l'effort F₄, puisque les éléments 30 et 40 sont solidaires en translation le long de l'axe X-X', grâce aux barrettes 50 qui sont solidaires, en translation parallèlement à l'axe X-X', à la fois avec les organes de verrouillage 40 et avec la bague de commande 30.

Dans cette configuration représentée à la figure 2, l'élément mâle B repousse le clapet 23, ce qui a pour effet de commencer à écarter la surface 23c du siège 21a. Ce mouvement d'accouplement n'a pas d'influence sur la position de la bague d'actionnement 70 qui demeure en place autour du corps 21.

Lors de la poursuite du mouvement d'accouplement, la gorge 16 de l'embout mâle B parvient en regard des bords 45 des organes de verrouillage 40. Comme ces organes de verrouillage sont soumis à l'action du ressort 60, à travers la bague de commande 30, les organes de verrouillage 40 sont repoussés partiellement à l'extérieur des logements 27 dans le canal 22, de telle sorte que leurs portions 46 s'engagent dans la gorge 16, ce qui les amène dans la configuration accouplée représentée à la figure 3.

Dans cette configuration, le clapet 23 est repoussé par le corps 11 au point que des orifices radiaux 23f de la partie creuse 23b dépassent le joint 24 vers l'arrière du corps 21. Ceci a pour effet de permettre la circulation de fluide de la canalisation C₁ vers la canalisation C₂, à travers le clapet 23.

On note γ le demi-angle au sommet du bord 16b de la gorge 16. Cet angle vaut en pratique 45°. En choisissant la valeur de l'angle α égale à la valeur de l'angle γ, on obtient un appui surfacique de la surface 44 de chaque organe de verrouillage 40 sur le bord 16b de la gorge 16, ce qui assure une immobilisation fiable de l'élément mâle B dans l'élément femelle A. Le contact cône sur cône entre chaque organe de verrouillage 40 et le corps 11 est réparti angulairement autour de l'axe X-X' sur un secteur angulaire égal à la valeur de l'angle β. Avec les deux organes de verrouillage 40, le contact cône sur cône est donc réparti sur 240° dans l'exemple représenté.

Les efforts d'arrachement éventuel de l'élément mâle B, qui résultent de la pression du fluide dans le canal 22 et de l'action du ressort 60, sont encaissés par le corps 21 au niveau de la zone de contact entre les surfaces 42 et 29, ces surfaces étant en contact surfacique étendu, ce qui permet une bonne répartition des efforts.

Lorsqu'il convient de désaccoupler les éléments A et B, l'opérateur exerce sur la bague d'actionnement 70 l'effort F₅ mentionné ci-dessus, ce qui a pour effet de faire reculer la bague de commande 30 à l'encontre de l'effort F₄ et, par voie de conséquence, les organes de verrouillage 40 à l'intérieur des logements 27, de telle sorte que leurs portions 46 délimitées par les surfaces tronconiques 44 sont dégagées de la gorge 16 et libèrent le passage pour le corps 11 de l'élément mâle B. Le déplacement des organes 40 dans les logements 27 est alors guidé par la coopération des surfaces 28 et 43, d'une part, 29 et 42, d'autre part. L'élément mâle B est repoussé par le clapet 23 qui est soumis à la pression régnant dans la canalisation amont C₁ et à l'effort F₁ du ressort 26 et dont la partie pleine 23a vient reposer contre le siège 21 a en coupant la circulation de fluide. L'effort F₅ est maintenu par l'opérateur tant que l'élément mâle B n'est pas retiré de l'élément femelle A.

Ainsi, la portion 46 de chaque organe de verrouillage 40 est mobile entre la première position de la figure 3, où elle est engagée dans la gorge 16 qu'elle retient dans l'élément femelle A, et la deuxième position des figures 2 et 4 où cette portion 46 ne s'oppose pas au déplacement de l'élément mâle B par rapport à l'élément femelle A, en translation selon l'axe X-X' et dans un sens de désaccouplement des éléments A et B.

La géométrie des organes de verrouillage 40 et des logements 27 permet de déplacer les portions 46 des organes de verrouillage 40 entre les deux positions précitées avec un mouvement de pivotement autour de l'axe Y-Y', ce qui ne pénalise pas l'encombrement radial de l'élément femelle A et du raccord R. Ceci permet de concevoir des éléments de verrouillage 40 relativement massifs et qui sont en contact surfacique étendu, d'une part, avec le corps 21 de l'élément femelle et, d'autre part, avec le corps 11 de l'élément mâle en configuration accouplée.

La géométrie de chaque organe de verrouillage 40 est telle que sa surface externe 42 est centrée sur le centre de courbure C₄₀ disposé selon la résultante des efforts de verrouillage exercés par l'élément mâle B sur cet organe de verrouillage au niveau de sa surface tronconique 44. Cette géométrie permet que l'élément mâle B et l'élément femelle A n'exercent pas sur les organes de verrouillage 40 un couple qui aurait tendance à les faire pivoter dans un sens de déverrouillage. En fait la résultante F₆ des efforts exercés par le bord 16b de la gorge 16 sur un organe de verrouillage 40 au niveau de la surface 44 passe par le point C₄₄ et est perpendiculaire à la surface 44, de sorte qu'elle s'étend selon la droite Δ₄₄ qui passe par le centre de courbure C₂₇/C₄₀. La résultante F₇ des efforts de retenue exercés par le corps 21 de l'élément femelle A sur chaque organe de verrouillage 40 au niveau de sa surface externe 42 passe également par le centre C₂₇/C₄₀ et est opposé à la résultante F₆. La résultante F₇ est donc également dirigée selon la droite Δ₄₄.

Dans toutes leurs positions, les organes de verrouillage 40 sont disposés axialement, le long de l'axe X_{A}-X'_{A}, au niveau du centre de courbure C₄₀ des surfaces 42 et 43, c'est-à-dire au niveau de l'axe Y-Y'. En d'autres termes, si l'on considère un plan Py perpendiculaire à l'axe X_{A}-X'_{A} et contenant le point C₄₀, alors ce plan coupe une partie des organes de verrouillage 40 dans toutes leurs positions, notamment dans la position de la figure 3 où les portions 46 font saillie hors des logements 27 pour verrouiller l'élément mâle B dans l'élément femelle A. Ceci évite l'arc-boutement des organes de verrouillage 40.

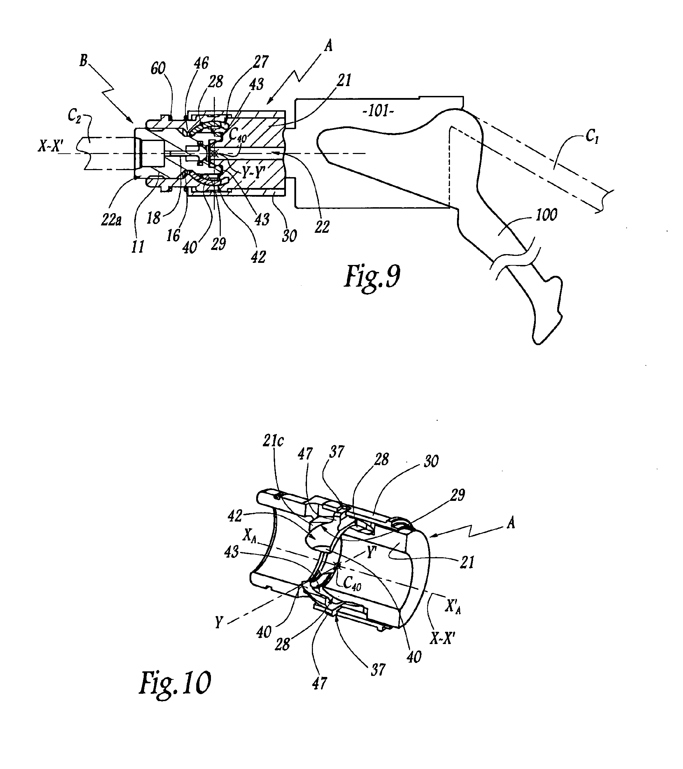

Dans les deuxième, troisième, quatrième et cinquième modes de réalisation représentés sur les figures 9 à 11, les éléments analogues à ceux du premier mode de réalisation portent les mêmes références. Ces modes de réalisation fonctionnent globalement comme le premier mode de réalisation et dans ce qui suit, on décrit essentiellement ce qui les distingue de ce premier mode.

Comme il ressort de la figure 9, il n'est pas obligatoire d'utiliser une bague d'actionnement avec l'invention. La figure 9 montre un deuxième raccord R conforme à l'invention constitué d'un élément mâle B dont le corps 11 a une géométrie comparable à celle du premier mode de réalisation et comporte, en outre, un clapet 18 d'obturation. L'élément femelle est équipé de deux organes de verrouillage 40 présentant sensiblement la même géométrie que celle des organes de verrouillage 40 du premier mode de réalisation et qui sont montés sur le corps 21 d'un pistolet A raccordé à une conduite C₁, alors que l'embout mâle B est raccordé à une conduite C₂ de fluide sous pression. Le pistolet A est un type d'élément femelle de raccord qui présente la particularité d'être équipé d'une gâchette 100. La manoeuvre des organes de verrouillage 40 est réalisée au moyen d'une bague de commande 30 qui est soumise à l'action d'un ressort 60 lequel exerce un effort élastique F₄ sur cette bague. Les déplacements de la bague de commande 30 à l'encontre de l'effort F₄ sont commandés par la gâchette 100 articulée sur un corps auxiliaire 101 du pistolet A. La liaison entre la gâchette 100 et la bague de commande 30 est réalisée par un système de came(s) et de galet(s) non représenté. D'autres modes de contrôle du déplacement de la bague de commande 30 autour du corps 21 peuvent être envisagés dans le cadre de la présente invention.

Dans ce mode de réalisation, l'effort F₄ exercé par le ressort 60 tend à déplacer par défaut les organes de verrouillage 40 vers l'intérieur de leur logement 27, de telle sorte que ces doigts sont dans une configuration où ils sont dégagés de la gorge périphérique 16 du corps 11 de l'élément mâle B emmanché dans l'élément femelle A. Lorsqu'il convient de verrouiller ce corps dans l'élément femelle A, la gâchette 100 est actionnée pour déplacer la bague de commande 30 à l'encontre de l'effort F₄, en direction de l'embouchure 22a du canal interne 22 du corps 21. Ceci a pour résultat de ramener les organes de verrouillage 40 vers l'embouchure 22a du canal 22 de l'élément femelle A. Ce déplacement des organes de verrouillage 40 a pour effet d'engager leurs portions avant 46 dans la gorge 16 de l'élément mâle B, pour le verrouiller dans l'élément femelle A, dans un sens de déconnexion.

La configuration par défaut des organes de verrouillage 40 de ce deuxième mode de réalisation est donc opposée à celle du premier mode de réalisation où les organes de verrouillage 40 sont, par défaut, dans une configuration d'engagement dans la gorge 16 du corps 11 de l'élément mâle ou dans une configuration où leur portion 46 est sur le trajet du corps 11 de l'élément mâle en cours d'emmanchement.

Lorsqu'il convient de déverrouiller l'élément mâle par rapport à l'élément femelle, on manoeuvre la gâchette 100 dans le sens opposé à la manoeuvre précédente, ce qui fait reculer la bague 30 à l'opposé de l'embouchure 22a. Ce mouvement de recul de la bague 30 est assisté par l'effort élastique exercé par le ressort.

Pour le reste, le deuxième mode de réalisation fonctionne d'une façon comparable à celle du premier mode de réalisation et chaque organe de verrouillage 40 est pourvu de deux surfaces en tronçon de sphère 42 et 43 qui permettent de guider, en coopération avec des surfaces correspondantes 28 et 29 du corps 21, le déplacement de chaque organe de verrouillage 40 entre les deux positions susmentionnées, par pivotement autour d'un axe Y-Y' passant par le centre de courbure C₄₀ des surfaces 43 et perpendiculaire à l'axe longitudinal central X_{A}-X'_{A} du pistolet A qui est confondu avec l'axe d'emmanchement X-X' de l'élément mâle B dans l'élément femelle A.

Comme représenté à la figure 10, la coopération entre la bague de commande 30 et les organes de verrouillage 40 d'un élément femelle A de raccord peut être obtenue par un ergot 47 central monobloc avec chaque organe de verrouillage 40 et engagé dans une lumière 37 de la bague de commande 30. Deux lumières 37 diamétralement opposées sont prévues sur la bague de commande 30. Dans ce mode de réalisation, chaque organe de verrouillage 40 est guidé dans son déplacement, entre deux positions, analogues à celles citées pour le premier mode de réalisation, par la coopération de deux surfaces 42 et 43 en tronçon de sphère et de surfaces correspondantes 28 et 29 en tronçon de sphère ménagées sur le corps 21 de l'élément femelle A. La surface 29 est définie par une partie auxiliaire 21 c du corps 21. Chaque organe de verrouillage 40 est déplacé par la bague de commande 30 en pivotant autour d'un axe Y-Y' passant par le centre de courbure C₄₀ de sa surface 43 et perpendiculaire à l'axe longitudinal central X_{A}-X'_{A} de l'élément femelle A, cet axe étant confondu avec l'axe d'emmanchement X-X'.

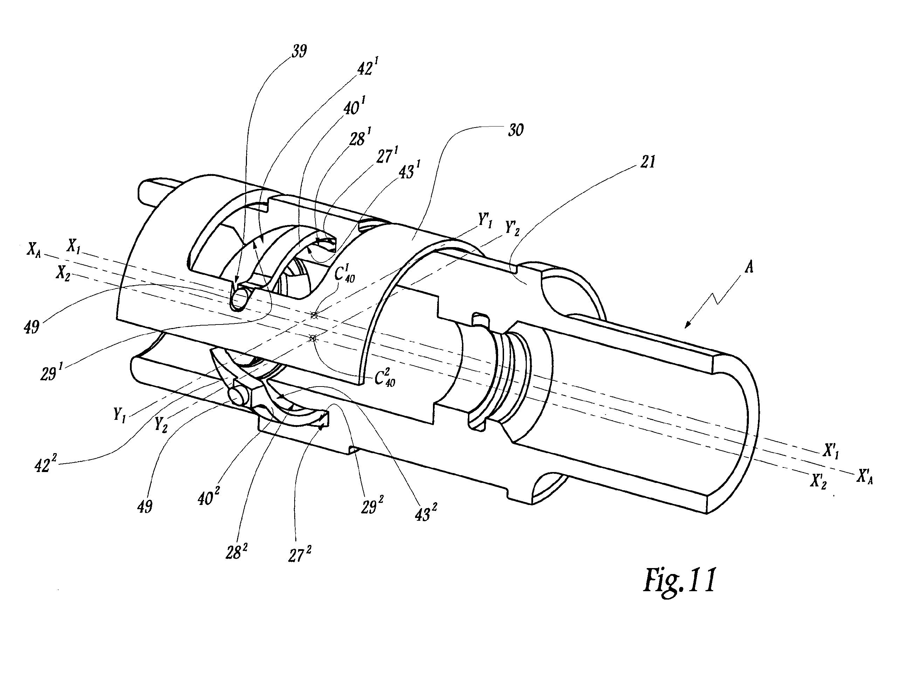

Dans le quatrième mode de réalisation de l'invention représenté à la figure 11, la bague de commande 30 est pourvue d'encoches 39 dans laquelle sont engagées des ergots 49 latéraux monoblocs avec deux organes de verrouillage 40¹ et 40² qui sont identiques. Chaque organe de verrouillage 40¹ ou 40² est pourvu de deux ergots latéraux 49 reçus dans deux encoches distinctes de la bague de commande 30. La bague de commande 30 est donc pourvue de quatre encoches 39, étant précisé ici que la partie inférieure de la bague de commande 30 n'est pas représentée à la figure 11.

Le corps 21 de l'élément femelle A comprend deux logements 27¹ et 27² délimités par deux surfaces en tronçon de sphère 28¹ et 29¹ ou 28² et 29², respectivement interne et externe. La surface en tronçon de sphère 28¹ du logement 27¹ représenté en partie supérieure de la figure 11 coopère avec une surface interne en tronçon en sphère 43¹ de l'organe de verrouillage 40¹, alors que sa surface en tronçon de sphère 29¹ coopère avec une surface externe en tronçon de sphère 42¹ de l'organe de verrouillage 40 pour guider celui-ci dans ses mouvements de pivotement. Ces mouvements de pivotement ont lieu autour d'un axe Y₁-Y'₁ passant par le centre de courbure C¹₄₀ de la surface interne 43¹ et de la surface externe 42¹ et perpendiculaire à un axe longitudinal X₁-X'₁ parallèle à l'axe longitudinal central X_{A}-X'_{A} de l'élément femelle A qui est confondu avec l'axe d'emmanchement X-X' d'un élément mâle dans l'élément femelle A. De même, l'organe de verrouillage 40² est pourvu de surfaces en tronçon de sphère, respectivement externe 42² et interne 43², qui sont centrées sur un centre de courbure C²₄₀ et qui coopèrent respectivement avec des surfaces 29² et 28² du logement 27² représenté en partie basse de la figure 11. Ceci permet de guider la rotation de l'organe de verrouillage 40² autour d'un axe Y₂-Y'₂ perpendiculaire à un axe longitudinal X₂-X'₂ de l'élément A, qui est parallèle à l'axe X_{A}-X'_{A}. L'axe Y₂-Y'₂ passe par le centre de courbure C²₄₀ des surfaces 42² et 43². Les points C¹₄₀ et C²₄₀ ne sont pas confondus et sont symétriques par rapport à l'axe X_{A}-X'_{A}. De même en est-il pour les axes Y₁-Y'₁ et Y₂-Y'₂. Comme dans le premier mode de réalisation, les surfaces 28¹ ou 28² et 43¹ ou 43², d'une part, et les surfaces 29¹ ou 29² et 42¹ ou 42², d'autre part, guident le mouvement d'un organe de verrouillage 40¹ ou 40² lors de l'accouplement des éléments A et B et lors du désaccouplement.

Dans le cinquième mode de réalisation de l'invention représenté à la figure 12, le corps 21 de l'élément femelle A comprend une partie annulaire 21 c et une partie sphérique 21d qui est centrée sur un point confondu avec le centre de courbure C₄₀ d'une surface externe en tronçon de sphère 42 d'un organe de verrouillage 40. L'organe 40 comprend également une surface 44 en secteur de tronc de cône destinée à coopérer avec un bord 16b d'une gorge périphérique externe 16 ménagée sur le corps 11 d'un élément mâle B de raccord. L'organe de verrouillage 40 est également pourvu d'une surface interne 43 dirigée vers le centre de courbure C₄₀ et qui est cylindrique, à section circulaire centrée sur un axe Y-Y' perpendiculaire au plan de la figure 12 et passant par le centre C₄₀, avec un rayon de courbure adapté au rayon de la partie 21 d du corps 21, de telle sorte qu'un guidage en rotation de l'organe de verrouillage 40 par rapport au corps fixe 21 peut être obtenu par la coopération de la surface interne 43 avec la surface externe 21e de la partie 21d. L'organe de verrouillage 40 est reçu dans un logement formé par le corps 21 et qui est délimité par une surface 29 en tronçon de sphère.

Par ailleurs, l'organe de verrouillage 40 est soumis à l'action d'une bague de commande 30 qui permet de le dégager de la gorge 16 lors du désaccouplement des éléments mâle et femelle B et A. L'organe de verrouillage 40 est également soumis directement à l'action d'un ressort 80 intercalé entre cet organe de verrouillage et le corps fixe 21, du côté opposé à l'embouchure 22a d'un canal de circulation de fluide 22 ménagé dans le corps 21. En d'autres termes, l'organe 40 est soumis à l'action de la bague de commande 30 pour son déplacement vers l'arrière du corps 21 de l'élément femelle A et à l'action du ressort 80 pour son déplacement vers l'avant de ce corps.

Comme dans les autres modes de réalisation, le déplacement d'un organe de verrouillage 40 a lieu par pivotement autour de l'axe Y-Y' en étant guidé par la coopération des surfaces 29 et 42 qui peuvent être en appui surfacique étendu.

Ce mode de réalisation permet de conserver un encombrement radial du mouvement des organes de verrouillage 40 relativement faible, comparable à celui des modes de réalisation précédents, alors que les surfaces qui reçoivent des efforts sont dimensionnés pour des contacts surfaciques relativement étendus. La surface interne 43 d'un organe 40 ayant simplement une fonction de guidage, son contact avec le corps fixe 21 peut être moins étendu et cette surface peut donc être cylindrique.

Le nombre d'organes de verrouillage 40 peut être différent de deux. Un seul organe de verrouillage peut être utilisé. Si plus de deux organes de verrouillage sont utilisés, ils sont de préférence régulièrement repartis autour de l'axe longitudinal central de l'élément femelle.

L'orientation angulaire de l'axe de pivotement Y-Y', Y₁-Y'₁ ou Y₂-Y'₂ respectivement par rapport à l'axe longitudinal X_{A}-X'_{A}, X₁-X'₁ ou X₂-X'₂ est telle que l'axe de pivotement est perpendiculaire au plan dans lequel coulisse un point d'un organe de verrouillage 40, 40¹ ou 40². Ce plan de coulissement est imposé par les moyens d'entraînement et/ou de guidage des organes de verrouillage 40 par rapport au corps 21, notamment les éléments 30 et 50 dans le premier mode de réalisation, les éléments 37 et 47 dans le troisième mode de réalisation, les éléments 39 et 49 dans le quatrième mode de réalisation et les éléments correspondants dans les autres modes de réalisation.

Préférentiellement, le centre de courbure C₄₀ des surfaces en tronçon de sphère d'un organe de verrouillage est situé radialement entre sa portion 46, qui peut faire saillie hors de son logement 27, et l'axe X_{A}-X'_{A}. Ainsi, l'axe de pivotement Y-Y', Y₁-Y'₁ ou Y₂-Y'₂ passe entre la surface 44 d'un organe 40 et l'axe X_{A}-X'_{A}, comme envisagé pour le quatrième mode de réalisation, ou coupe cet axe, comme envisagé pour les autres modes de réalisation.

Les caractéristiques des modes de réalisation et variantes mentionnés ci-dessus peuvent être combinés entre elles dans le cadre de l'invention. En particulier, les centres de courbure C₄₀ des surfaces en tronçon de sphère des différents organes de verrouillage peuvent être distincts dans les modes de réalisation des figures 1 à 10 et 12, comme mentionné pour le quatrième mode de réalisation.

## Revendications

1. Elément femelle (A) de raccord rapide (R) destiné à la jonction amovible de canalisations (C₁, C₂) de fluide sous pression, cet élément femelle étant apte à recevoir en emmanchement, selon un axe longitudinal (X_{A}-X'_{A}) de cet élément femelle, un embout (11) d'un élément mâle (B) de raccord, cet élément femelle étant équipé d'au moins un organe de verrouillage (40) mobile dans un logement (27; 27¹, 27²) ménagé dans un corps (21) de l'élément femelle, entre une première position, où une portion (46) de l'organe de verrouillage fait saillie hors du logement dans une configuration où elle peut être engagée dans une gorge périphérique (16) d'un embout (11) d'élément mâle emmanché dans l'élément femelle, et une deuxième position où la portion (46) de l'organe de verrouillage est dégagée par rapport à la gorge d'un embout d'élément mâle emmanché dans l'élément femelle, alors qu'une bague de commande (30), coulissante par rapport au corps (21) de l'élément femelle parallèlement à un axe longitudinal (X_{A}-X'_{A}) de l'élément femelle, est apte à déplacer l'organe de verrouillage (40) entre ses première et deuxième positions, **caractérisé en ce que** l'organe de verrouillage (40 ; 40¹, 40²) est pourvu d'au moins une surface (42, 43 ; 42¹, 42², 43¹,43²) en tronçon de sphère et **en ce que** le déplacement de l'organe de verrouillage entre ses première et deuxième positions a lieu par pivotement autour d'un axe (Y-Y' ; Y₁-Y'₁, Y₂-Y'₂) fixe par rapport au corps (21) de l'élément femelle, passant par le centre de courbure (C₄₀) de la surface en tronçon de sphère de l'organe de verrouillage et perpendiculaire à un axe longitudinal (X_{A}-X'_{A}; X₁-X'₁ ; X₂-X'₂) de l'élément femelle (A).

2. Elément femelle de raccord selon la revendication 1, **caractérisé en ce que** le logement (27 ; 27¹, 27²) est pourvu d'au moins une surface (28, 29 ; 28¹, 28², 29¹, 29²) de guidage de l'organe de verrouillage (40 ; 40¹, 40²) lors de son déplacement entre ses première et deuxième positions, cette surface de guidage étant en tronçon de sphère dont le centre de courbure (C₂₇) est confondu avec le centre de courbure (C₄₀) de la surface en tronçon de sphère (42, 43 ; 42¹, 42², 43¹, 43²) de l'organe de verrouillage en configuration montée de l'organe de verrouillage dans le logement.

3. Elément femelle de raccord selon l'une des revendications précédentes, **caractérisé en ce que** l'organe de verrouillage (40 ; 40¹, 40²) est pourvu de deux surfaces concentriques (42, 43) en tronçon de sphère.

4. Elément femelle de raccord selon l'une des revendications précédentes, **caractérisé en ce qu'**il comprend des moyens (60) d'application sur la bague de commande (30) d'un effort (F₄) de rappel élastique de l'organe de verrouillage (40) vers l'une de ses première et deuxième positions.

5. Elément femelle de raccord selon l'une des revendications précédentes, **caractérisé en ce qu'**il est équipé de deux organes de verrouillage (40 ; 40¹, 40²) mobiles chacun dans un logement (27, 27¹, 27²) ménagé dans le corps (21) de l'élément femelle (A) et **en ce que** les deux organes de verrouillage (40), d'une part, et les deux logements (27), d'autre part, sont disposés de façon symétrique de part et d'autre de l'axe longitudinal (X_{A}-X'_{A}).

6. Elément femelle de raccord selon l'une des revendications précédentes, **caractérisé en ce qu'**il est équipé d'au moins deux organes de verrouillage (40) et **en ce que** la ou les surfaces en tronçon de sphère (42, 43) de tous les organes de verrouillage ont un centre de courbure commun (C₄₀).

7. Elément femelle de raccord selon l'une des revendications précédentes, **caractérisé en ce que** la portion (46) de l'organe de verrouillage (40 ; 40¹, 40²), qui fait saillie hors du logement (27, 27¹, 27²) dans la première position de l'organe de verrouillage (40), a une surface (44) en section de tronc de cône apte à venir en appui surfacique contre un bord tronconique (16b) d'une gorge (16) d'un embout (11) d'élément mâle (B) emmanché dans l'élément femelle.

8. Elément femelle de raccord selon la revendication 7, **caractérisé en ce que** une droite (Δ₄₄) passant par le centre géométrique (C₄₄) de la surface (44) en tronc de cône et perpendiculaire à cette surface, passe par le centre de courbure (C₄₀) de la surface en tronçon de sphère (42, 43) de l'organe de verrouillage.

9. Elément femelle de raccord selon l'une des revendications 7 ou 8, **caractérisé en ce que** la surface en section de tronc de cône (44) s'étend autour de l'axe longitudinal (X_{A}-X'_{A}) de l'élément femelle sur un secteur angulaire dont l'angle au sommet (β) a une valeur comprise entre 90° et 150°, de préférence de l'ordre de 120°.

10. Elément femelle de raccord selon l'une des revendications précédentes, **caractérisé en ce qu'**un plan (P_{Y}) perpendiculaire à l'axe longitudinal (X_{A}-X'_{A}) de l'élément femelle et contenant le centre de courbure (C₄₀) de la surface en tronçon de sphère (42, 43 ; 42¹, 42², 43¹, 43²) d'un organe de verrouillage (40 ; 40¹, 40²) coupe cet organe de verrouillage dans ses première et deuxième positions.

11. Raccord rapide (R) pour la jonction amovible de canalisations (C₁, C₂) de fluide sous pression, ce raccord comprenant deux éléments (A, B), respectivement mâle et femelle, aptes à s'emmancher l'un dans l'autre, **caractérisé en ce que** l'élément femelle (A) est selon l'une des revendications précédentes.

## Claims

1. A female quick coupling element (A) for releasably joining together pipes (C₁, C₂) of fluid under pressure, the female element being suitable for receiving an endpiece (11) of a male coupling element (B) engaged thereon along a longitudinal axis (X_{A}-X'_{A}) of said female element, the female element being fitted with at least one locking member (40) movably in a housing (27; 27¹, 27²) formed in a body (21) of the female element, between a first position in which a fraction (46) of the locking member projects out from the housing in a configuration in which it can be engaged in a peripheral groove (16) of a male element endpiece (11) engaged in the female element, and a second position in which the fraction (46) of the locking member is disengaged from the groove of a male element endpiece in the female element, while a control ring (30) mounted to slide relative to the body (21) of the female element parallel to a longitudinal axis (X_{A}-X'_{A}) of the female element is suitable for moving the locking member (40) between its first and second positions, the female element being **characterized in that** locking member (40, 40¹, 40²) is provided with at least one surface (42, 43; 42¹, 42², 43¹, 43²) in the form of a portion of a sphere, and **in that** the movement of the locking member between its first and second positions place by pivoting about an axis (Y-Y'; Y₁-Y'₁; Y₂-Y'₂) that is stationary relative to the body (21) of the female element, passing through the center of curvature (C₄₀) of the surface in the form of a portion of a sphere of the looking member and perpendicular to a longitudinal axis (X_{A}-X'_{A}; X₁-X'₁: X₂-X'₂) of the female element (A).

2. A female coupling element according to claim 1, **characterized in that** the housing (27; 27¹, 27²) is provided with at least one guide surface (28, 29; 28¹, 28², 29¹, 29²) for guiding the locking member (40; 40¹, 40²) during its movement between its first and second positions, said guide surface being in the form of a portion of a sphere having its center of curvature (C₂₇) coinciding with the center of curvature (C₄₀) of the surface in the form of a portion of a sphere (42, 43; 42¹, 42², 43¹, 43²) of the locking member when the locking member is in a configuration mounted in the housing.

3. A female coupling element according to any preceding claim, **characterized in that** the locking member (40; 40¹, 40²) is provided with two concentric surfaces (42, 43) in the form of portions of a sphere.

4. A female coupling element according to any preceding claim, **characterised in that** it includes return means (60) for applying a resilient return force (F₄) on the control ring (30) urging the locking member (40) towards one of its first and second positions.

5. A female coupling element according to any preceding claim, **characterized in that** it is fitted with two locking members (40; 40¹, 40²) each movable in a housing (27, 27¹, 27²) formed in the body (21) of the female element (A), and **in that** the two looking members (40) and the two housings (27) are disposed symmetrically on either side of the longitudinal axis (X_{A}-X'_{A}).

6. A female coupling element according to any preceding claim, **characterized in that** it is fitted with at least two locking members (40) and **in that** the surfaces (42, 43) in the form of a portion of a sphere of all of the locking members have a common center of curvature (C₄₀).

7. A female coupling element according to any preceding claim, **characterised in that** the fraction (46) of the locking member (40; 40¹, 40²) that projects from the housing (27, 27¹, 27²) in the first position of the locking member (40) has a surface (44) in the form of a section of a truncated cone suitable for coming into surface-on-surface contact against a frustoconical edge (16b) of a groove (16) of an endpiece (11) of a male element (B) engaged in the female element.

8. A female coupling element according to claim 7, **characterized in that** a straight line (Δ₄₄) passing through the geometrical center (C₄₄) of the surface (44) in the form of a truncated cone and perpendicular to said surface passes through the center of curvature (C₄₀) of the surface (42, 43) in the form of a portion of a sphere of the locking member.

9. A female coupling element according to claim 7 or claim 8, **characterised in that** the surface (44) in the form of a section of a truncated cone extends around the longitudinal axis (X_{A}-X'_{A}) of the female element over an angular sector having an angle at the apex (β) with a value lying in the range 90° to 150°, preferably of the order of 120°.

10. A female coupling element according to any preceding claim, **characterized in that** a plane (P_{Y}) perpendicular to the longitudinal is (X_{A}-X'_{A}) of the female element and containing the center of curvature (C₄₀) of the surface (42, 43; 42¹, 42², 43¹, 43²) in the form of a portion of a sphere of a locking member (40; 40¹, 40²) intersects said looking member in its first and second positions.

11. A quick coupling (R) for releasably joining together pipes (C₁, C₂) for fluid under pressure, the coupling comprising male and female elements (A, B) suitable for engaging one in the other, and being **characterized in that** the female element (A) is according to any preceding claim.

## Patentansprüche

1. Aufnahmeelement (A) einer Schnellkupplung (R), die für eine lösbare verbindung von Leistungen (C₁, C₂) für unter Druck stehende Fluide vorgesehen ist, wobei das Aufnahmeelement geeignet ist, in gemäß einer Längsachse (X_{A} - X'_{A}) dieses Elements ineinandarsteckenden Weise einen Ansatz (11) eines Einsteckelements (B) der Kupplung aufzunehmen, wobei dieses Aufnahmeelement mit mindestens einem Verriegelungsorgan (40) ausgerüstet ist, das in einem Aufnahmeraum (27; 27¹; 27²) , der in einen Körper (21) des Aufnahmeelements eingearbeitet ist, zwischen einer ersten Postition, in der ein Teil (46) des Verriegelungsorgans aus dem Aufnahmeraum herausragt in einer Konfiguration, in der es in eine Umfangsnut (16) eines Ansatzes (11) des in das Aufnahmeelement gesteckten Einsteckelement eingreifen kann, und einher zweiten Position, in der der Teil (46) des Verriegelungsorgans in Bezug auf die Nut eines Ansatzes des in das Aufnahmeelement gesteckten Einsteckelements freigesetzt ist, wobei ein Steuerring (30), der in Bezug auf den Körper (21) des Aufnahmeelements parallel zu einer Längsachse (X_{A}-X'_{A}) des Aufnahmeelements geleitet, geeignet ist, Verriegelungsorgan zwischen seiner und seiner zweiten Position zu bewegten, **dadurch gekennzeichnet, dass** das Verriegelungsorgan (40; 40¹; 40²) mit mindestens einer Fläche (42, 43; 42¹, 42², 43¹, 43²) in Kugelabschnittsform versehen ist und dass die Bewegung des Verriegelungsorgans zwischen seiner ersten und zweiten Postition durch Schwenken um eine in Bezug auf den Körper (21) Aufnahmeelements feststehenden Achse (Y-Y'; '; Y₁-Y'₁, Y₂-Y'₂) stattfindet, die durch das Zentrum der Krümmung (C₄₀) der Kugelabschnittsfläche des Verriegelungsorgans geht und senkrecht zu der Längsachse (X_{A}-X'_{A}; X₁-X'₁; X₂-X'₂) Aufnahmeelementes (A) liegt.

2. Aufnahmeelement (A) der Kupplung Anspruch 1, **dadurch gekennzeichnet, dass** der Aufnahmeraum (27; 27¹; 27²) mit mindestens einer Fläche (28, 29; 28¹, 28² 29¹, 29²) zur Führung des Verriegelungsorgans (40; 40¹, 40²) bei seiner Bewegung zwischen seiner ersten und zweiten Postition versehen ist, wobei diese Führungsfläche eine Kugelabschnittsform aufweist, deren Zentrum der Krümmung (C₂₇) mit dem Zentrum (C₄₀) der Krümmung der Fläche (42, 43; 42¹, 42², 43¹, 43²) in Kugelabschnittsform des Verriegelungsorgans in der Konfiguration übereinstimmt, in der das verriegelungsorgan in den Aufnahmeraum angeordnet ist.

3. Aufnahmeelement (A) der Kupplung nach einem der vorhergehenden Ansprüche, **dadurch gekennzeichnet, dass** das Verriegelungsorgan (40, 40', 40²) mit zwei konzentrischen Flächen (42, 43) in Kugelabschnittsform versehen ist.

4. Aufnahmeelement (A) der Kupplung nach einem der vorhergehenden Ansprüche, **dadurch gekennzeichnet, dass** es Mittel (60) zum Ausbringen einer elastischen Rückstellkraft in die erste oder die zweite Position auf den Steuerring (30) des Verriegelungsorgans (40) aufweist.

5. Aufnahmeelement (A) der Kupplung nach einem der vorhergehenden Anspruche, **dadurch gekennzeichnet**, es mit zwei Verriegelungsorganen (40; 40¹, 40²) ausgerüstet ist, die jeweils in einem in dem Körper (21) Aufnahmeelements (A) eingearbeiteten Aufnahmeraum (27, 27¹, 27²) beweglich sind, und die Verriegelungsorgane (40) einerseits und die zwei Aufnahmeräume (27) andererseits in symmetrischer Form beidseitig der Längsachse (X_{A}-X"_{A}) angeordnet sind.

6. Aufnahmeelement (A) der Kupplung nach seinem der vorhergehenden Anspruche, **dadurch gekennzeichnet, dass** es mit mindestens zwei Verriegelungsorganen (40) ausgerüstet ist und dass die Fläche (n) in Kugelabschnittsform (42, 43) aller Verriegelungsorgane ein gemeinsames Krümmungszentrum (C₄₀) aufweisen.

7. Aufnahmeelement (A) der Kopplung nach einem der vorhergehenden Anspruche, **dadurch gekennzeichnet, dass** der Teil (46) des verriegelungsorgans (40; 40¹ 40²), der aus dem Aufnahmeraum (27, 27¹, 27²) in der ersten Position des Verriegelungsorgans (40) herausragt, eine Fläche (44) in Form eines Kegelstumpfabschnittes aufweist, die geeignet ist, in Flächenabstützung gegen den kegelstumpfartigen Rand (16b) einer Nut (16) eines Ansatzes (11) des Einsteckelements (B) zu kommen, das in das Aufnahmeelement gesteckt ist.

8. Aufnahmeelement (A) der Kupplung nach Anspruch 7, **dadurch gekennzeichnet, dass** eine Gerade (Δ₄₄), die durch geometrische Zentrum (C₄₄) der Fläche (44) in Form eines Kegelstumpfabschnittes hindurchgeht und senkrecht zu dieser Fläche liege, durch das Krümmungszentrum (C₄₀) der Fläche in Kugelabschnittsform (42, 43) des Verriegelungsorgans geht.

9. Aufnahmeelement (A) der Kopplung nach Anspruch 7 oder 8, **dadurch gekennzeichnet, dass** die Fläche (44) in Form eines Kegelstumpfabschnittes sich um die Längsachse (X_{A}-X'_{A}) des Aufnahmeelements einen Winkelsektor verstreckt, dessen Scheitelwinkel (β) einen Wert zwischen 90° und 150°, vorzugsweise in der Größenordnung von 120° aufweist.

10. Aufnahmeelement (A) der Kupplung nach einem der vorhergehenden Ansprüche, **dadurch** gekennzeichnest, dass eine Ebene (P_{Y}), die senkrecht zur Längsachse (X_{A}-X'_{A}) des Aufnahmeelements liegt und das Krümmungszentrum (C₄₀) der Fläche (42, 43; 42¹, 42², 43¹, 43²) in Kugelabschnittsform eines Verriegelungsorgans (40; 40¹, 40²) enthält, Verriegelungsorgan in seiner ersten und zweiten Postition schneidet.

11. Schnellkupplung (R) für die lösbare Verbindung von Leitungen (C₁, C₂) für unter Druck stehenden Fluiden, wobei diese Kopplung zwei Elemente (A, B), ein Aufnahmeelement und sein Einsteckelement, aufweist, die geeignet sind, ineinander gesteckt zu werden, **dadurch gekennzeichnet, dass** das Aufnahmeelement (A) nach einem der vorhergehenden Ansprüche ausgebildet ist.
